# EUROPEAN PATENT SPECIFICATION

(11) **EP 3 546 105 B1**
(45) Date of publication and mention of the grant of the patent: **02.12.2020**
(21) Application number: 19154309.9
(22) Date of filing: 29.01.2019
(51) Int. Cl.: B23K 11/00, B21F 27/10, B23K 11/11, B23K 11/36, B65G 47/244, B23K 101/22, B23K 103/04

(54) **PLANT FOR AND METHOD OF MANUFACTURING ELECTRO-WELDED METAL MESHES**
ANLAGE UND VERFAHREN ZUR HERSTELLUNG VON ELEKTROGESCHWEISSTEN METALLNETZEN
INSTALLATION ET PROCÉDÉ POUR LA FABRICATION DE MAILLES MÉTALLIQUES ÉLECTRO-SOUDÉES

(30) Priority: 19.02.2018 IT 201800002827
(43) Date of publication of application: 02.10.2019
(73) Proprietor: A.W.M. S.p.A., 33010 Magnano in Riviera (UD) (IT)
(72) Inventor: BERNARDINIS, Claudio, 33010 Magnano in Riviera (IT); BERNARDINIS, Roberto, 33010 Magnano in Riviera (IT)
(74) Representative: Giugni, Diego

(56) References cited:
- EP-A1- 2 433 724
- AT-B- 405 030
- CN-U- 204 508 153
- US-A- 2 401 319
- US-A- 4 605 046

## Description

### FIELD OF INVENTION

. The present invention relates to a plant for and a method of producing electro-welded metal meshes, which provides innovative mechanisms for the loading and positioning of the transversal wires. These meshes are in particular used for the production of prefabricated reinforced concrete components for the building industry.

### PRIOR ART

. Modern construction increasingly resorts to the manufacture of prefabricated reinforced concrete components. The meshes formed by electro-welded wires are one of the basic elements for the manufacture of said prefabricated components.

. The meshes are normally formed by wires arranged orthogonal to each other and may have very different geometrical configurations, for example with partial empty areas, with reinforced positions, and so on, corresponding to the conformation of the building component to be produced.

. The prior art proposes plants of the automatic type, which make the metal meshes starting from rollers of metal wires that are unwound, straightened, cut to size and aligned on the work surface of the meshes. The transversal wires, in particular, must be conveniently aligned end to end to the work plane, rotated by 90° with respect to the longitudinal wires, in order to carry out the welding operation.

. A type of plants that work the wires in the above manner comprises a production line along which a loading station of the cut longitudinal wires, a welding station of the transversal wires on the longitudinal wires, a station for unloading the formed meshes are distributed in succession. Moreover, the plant comprises a plurality of rollers aligned along the production line and connected to a storage station for the cut longitudinal wires, the latter side by side with the loading station of the production line. A station for drawing, stretching and cutting the longitudinal wires is then positioned in line between the rollers and the corresponding storage station aligned with the welding station.

. At the drawing, stretching and cutting station, there is also a system for conveying the transversal wires to a moving group. Such a moving group is positioned above the longitudinal wires at the entrance to the welding station and comprises a loading member of transverse cut wires which moves, by means of an arm with a fixed rotation axis, from a position parallel to the production line to a position orthogonal to the production line. During this rotation, the transversal wires are affixed end to end to the loading member proximally to the fixed rotation axis. Therefore, the abutment line of the wires is in the correct position at the entrance to the welding station.

. This type of machine, although working well, suffers from a drawback related to limited production capacities. In fact, both the longitudinal and the transversal wires are provided by a single series of rollers arranged in a single row, each roller carrying wires also of different sections.

. Moreover, the conveying system of the transversal wires to the moving group complicates the machine and, above all, does not allow the transversal wires to be positioned indifferently above or below the longitudinal wires to carry out the welding on one of the two planes identified by said longitudinal wires.

. In order to increase productivity, document AT405030 (basis for the preamble of claims 1 and 8) describes a machine with two lines of rollers flanked to the production line: one connected to a stretching and cutting station so as to provide longitudinal wires to said production line and downstream of the welding station, and one connected to a stretching and cutting station so as to provide transversal wires at the welding station and orthogonally to the production line.

. This solution, however, is rather cumbersome since both the longitudinal and transversal wires must make large bending paths to be correctly positioned. In fact, especially with wires having large diameters, it is necessary to take up ample space to allow bending without damage.

### TECHNICAL PROBLEM TO SOLVE

. The technical problem that the present invention aims to solve therefore relates to the increase in productivity of a plant for the production of electro-welded metal meshes, without incurring the drawbacks of the prior art described above.

. This problem is solved by a plant and a method for manufacturing electro-welded metal meshes comprising a transversal wire transfer system particularly compact and effective in correctly transferring the transversal wires from the drawing, stretching and cutting station to the welding station independently of the longitudinal wire transfer system.

. Accordingly, a first object of the present invention is a particularly productive and efficient plant for the production of electro-welded metal meshes.

. A second object is a plant of compact dimensions and devoid of complex and cumbersome devices for transferring the transversal wires from the stretching and cutting station to the welding station.

. A further object is a method for producing electro-welded metal meshes comprising operating steps adapted to increase the productivity of a similar method according to the prior art.

### SUMMARY OF THE INVENTION

. The idea underlying the present invention consists in substantially reducing or eliminating the operations of rotation and/or bending of the transversal wires which must be guided in the cutting to size and welding workstations, maintaining the lines of the rollers of the transversal and longitudinal wires side by side, respectively.

. To do so, we have studied how to keep the transversal wires always straight and parallel to each other, and to transfer the orientation operations thereof after the stretching and cutting on a loading and transfer group, which picks them up and takes them on the work surface, keeping the same and correct abutment in the transfer from the cutting unit to the welding unit.

. The solution was found by using a special kinematic device that provides the abutment of the transversal wires in the opposite direction to the traditional one.

. As explained above, generally the transversal wires must be transferred from the drawing, stretching and cutting stations to the welding station by means of a transfer system and a rotating arm, the latter positioned on the production line above the longitudinal wires.

. With the duplication of the series of rollers, the series which must give rise to the transversal wires must be positioned side by side to the series from which the longitudinal wires derive and further away from the production line. In this way, however, the rotating arm cannot be mounted above the production line but must be mounted next to it and at the welding station. But with this position, since the abutment line of the transversal wires on the rotating arm remains proximal to the rotation axis, it is clear that the abutment line cannot be in the correct position because it is far from the entrance in the welding station.

. A plant for and a method of manufacturing electro-welded metal mesh formed from longitudinal wires and transversal wires according to the present invention are defined respectively in independent claims 1 and 8.

Further embodiments of the present invention are defined in the dependent claims.

Therefore,
the kinematic device according to the present invention is designed in such a way as to allow the correct positioning of the transversal wires during the rotation of the arm.

### DESCRIPTION OF THE DRAWINGS

**.** Objects and features of the invention will be apparent from the following description, made by way of a non-limiting example with reference to the accompanying figures, in which:
- Figure 1 schematically shows a plan view of an electro-welded mesh, with particular geometrical conformation, for the construction of a prefabricated reinforced concrete component;
- Figure 2 shows a schematic overall plan view of a plant for the production of electro-welded metal meshes, according to the present invention;
- Figure 3 shows a plan view of an enlarged detail of figure 2, to highlight in different operating positions a kinematic device which allows the implementation of the method according to the present invention.

### DETAILED DESCRIPTION OF THE INVENTION

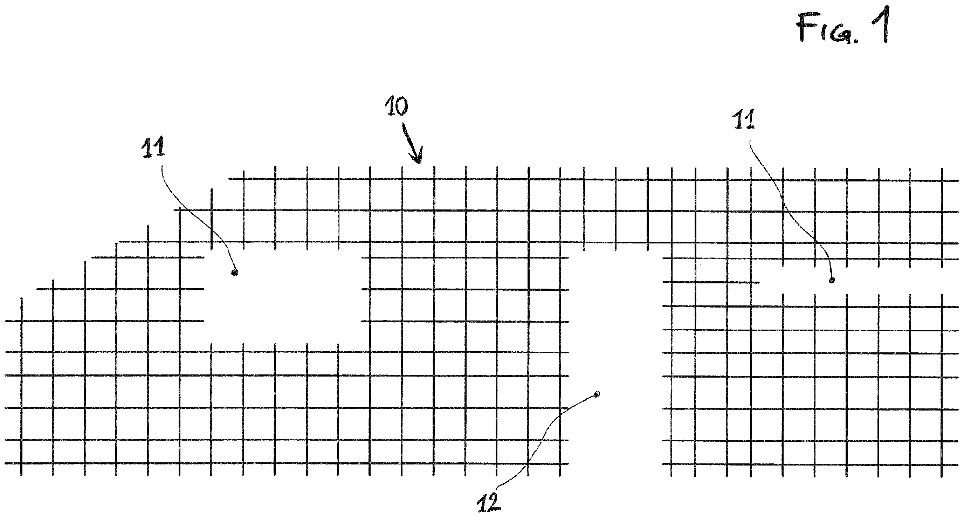

**.** The invention will now be described with reference to an exemplary embodiment which schematically shows a plan view of an electro-welded mesh 10, with orthogonal links, with a specific geometrical configuration corresponding to the conformation of a building component to be produced (figure 1). In the example in the figure, the building component to be produced is a wall, having openings for a window 11 and a door 12.

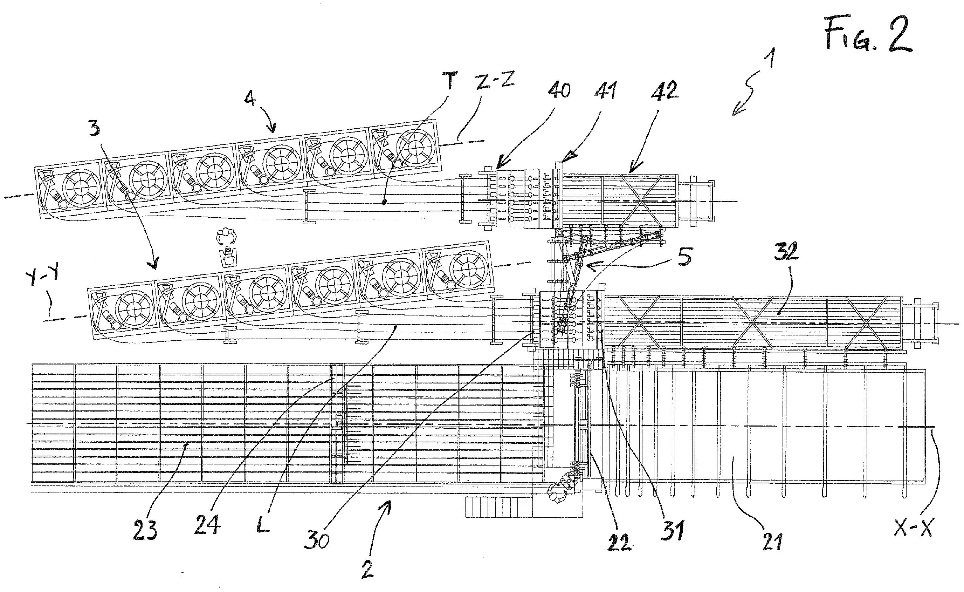

**.** Figure 2 shows a plan view, according to the present invention, of an overall schematic view of a plant 1 for producing electro-welded metal meshes, which must have a particular geometrical conformation, such as that of the example in figure 1.

**.** The plant 1 comprises a flat manufacturing line 2 which extends along a longitudinal axis X-X. The manufacturing line conventionally comprises in turn a station 21 for loading longitudinal wires L that have been stretched and cut to size according to a manufacturing program of an electro-welded metal mesh such as that described in figure 1. The loading station 21 for the longitudinal wires is positioned along the manufacturing line 2 upstream a welding station 22. Downstream of the welding station 22 there extends an unloading station 23 of the electro-welded meshes comprising a moving device 24 for the meshes having conventional gripping means (not shown) for transferring the meshes to a storage station or a forming zone of the corresponding reinforced concrete wall (not shown).

**.** A first plurality of rollers 3, aligned along an axis Y-Y adjacent to the manufacturing line 2, comprises metal wires L forming the longitudinal wires of the mesh to be manufactured.

**.** A second plurality of rollers 4, aligned along an axis Z-Z adjacent to the first plurality 3 of rollers, comprises metal wires T forming the transversal wires of the mesh to be manufactured.

. Preferably, the first 3 and the second 4 plurality of rollers are flanked on one side of the manufacturing line 2 at the unloading station 23 of the electro-welded meshes. Moreover, each of said plurality of rollers is associated with a stretching station 30 and 40, respectively, followed by a cutting station 31 and 41, respectively, so as to receive from the rollers the unwound metal wires for stretching them, aligning them parallel to each other and cutting them to size according to a predefined program determined by the specific shape of the mesh to be produced. Downstream of the respective cutting stations 31 and 41 there are respective collecting stations 32 and 42 of the longitudinal wires L and transversal ones cut away. In particular, the collecting station 32 of the longitudinal wires L is positioned adjacent to the loading station 21 of said wires on the manufacturing line 20 to allow the transfer of the cut wires from the collecting station to the loading station by means of conventional devices, not shown, for example clamp or magnetic. The cutting station 41 of the transversal wires T is instead positioned at the same level as the welding station 22 to allow the transfer of the cut transversal wires from the collecting station 42 to the welding station with the correct abutment, as explained below.

. It should be noted that the aforementioned configuration of the manufacturing stations of the plant 1 have been designed so as to have the production line 2 substantially parallel to the direction of stretching, cutting and collecting of the longitudinal L and transversal T wires, while the direction of advancement of the manufacturing line is opposite to the direction of advancement in the stretching, cutting and collecting stations of said wires.

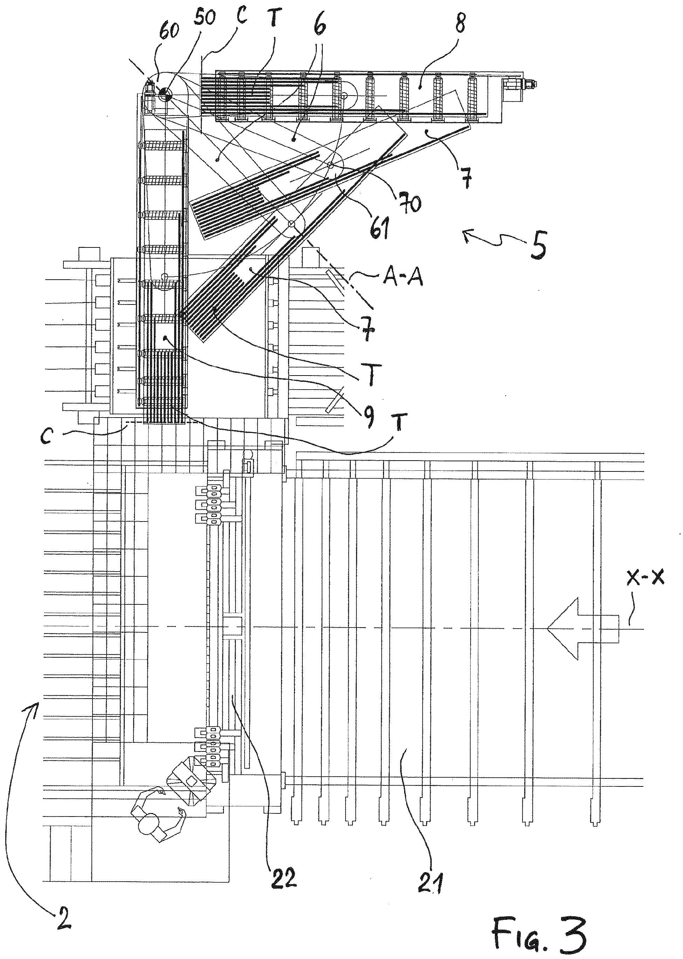

. In addition, according to the essential and advantageous feature of the present invention, the transfer of the transversal wires T from the collecting station 42 after cutting at the entrance to the welding station 22 mounted on the manufacturing line 2 is carried out by a kinematic device 5 (Figures 2 and 3). The kinematic device 5 performs the transfer of the cut transversal wires T by means of moving means which perform a rotary-translation movement with respect to a vertical axis 50 arranged in a fixed position, adjacent to the cutting station 41 of the transversal wires T.

. According to a first embodiment of the invention, as shown in figure 3, the kinematic device 5 comprises a rotary arm 6 which extends rectilinear along an axis A-A between a first end 60 and a second end 61. The first end 60 is rotatably connected around said vertical axis 50, or fixed roto-translation centre, fixed with respect to the manufacturing line 2. The second end 61 is connected to a transfer group 7 of the transversal wires T, already cut to size. Such a transfer group 7 is connected to the second end 61 of the arm 6 by means of a pin 70, arranged in a preferably substantially central position of the group 7, and is driven to rotate around said connecting pin 70. The arm 6 and the pin 70 constitute said movement means.

**.** In other words, the device 5 comprises a rectilinear arm 6 rotatably fixed to a first end 60 on a shaft or rotary-translation centre 50 and a transfer group 7 rotatably fixed to a second end 61 of said arm by means of a pin 70 which centrally engages said group.

**.** Moreover, the device 5 moves between a station 8 for loading the cut transversal wires T on the transfer group 7, said station 8 extending substantially parallel to the manufacturing line 2 and a station 9 for unloading the wires from said group 7, said station 9 extending substantially orthogonal to the manufacturing line. In such unloading station 9, therefore, the transfer group 7 of the transversal wires T is substantially orthogonal to the manufacturing line 2. It follows that the movement of the arm 6 takes place along an arc of 90° between said loading station 8 and said unloading station 9, the centre whereof is represented precisely by the fixed roto-translational centre.

**.** Of course, the transfer group 7 must be provided with gripping systems for the single transversal wires T, for example mechanical clamps or magnetic elements, known per se, which are selectively programmed to bring the wires into the precise position in which they are to be welded to form the metal mesh to be produced.

**.** As shown in the various positions in Figure 3, the transfer group 7 of the transversal wires T is then subjected to a double rotation, both with respect to the shaft 50 and around the pin 70. This double rotation produces a translation of the transfer group 7, which is brought from a position substantially parallel to the manufacturing line 2 to a position orthogonal to said manufacturing line, as required for the subsequent welding operation so as to form the metal mesh.

**.** In this way, as better shown in Figure 3, when the cut transversal wires T are transferred from the collecting station 42 onto the transfer station 8 of the kinematic device 5, the cutting or abutting line C of the transversal wires T is located in a position adjacent to the shaft or centre of rotation 50. Following the aforementioned advantageous roto-translational movement of the device 5, the abutting line C is in a position remote from the centre of rotation 50. In other words, said line C before the roto-translation is positioned on the transfer group 7 in the loading station 8 near the fixed axis 60, whereas after completion of the roto-translation, the line C is positioned on the transfer group 7 in the unloading station 9 distal to the fixed axis 50. Moreover, whereas before the roto-translation, the line C of the wires is substantially orthogonal to the manufacturing line 2, after the roto-translation it is instead substantially parallel to said manufacturing line.

. In other words, in the plant according to the present invention (Figures 2 and 3), the cutting and abutting edge C of the transversal wires T is orthogonal to the forward direction of the longitudinal wires L, which is opposite to the direction of advancement of the manufacturing line 2 of the mesh to be produced.

. The embodiment of the described solution requires the use of a known mechanical, or pneumatic or electrical transmission, between the arm 6 and the centre of rotation 50, and between the transfer group 7 and the centre of rotation 70.

. As an alternative to the previously described solution, the roto-translational movement of the transfer group 7 of the transversal wires T can also be performed by means of a synchronized linear sliding of the ends of the group, respectively, along a guide having an axis parallel to the longitudinal axis of the manufacturing line 2 of the meshes and along a guide having an axis orthogonal to the manufacturing line of the meshes.

. Whatever the mode of implementation of the rotational movement with respect to the axis 60, the solution falls within the scope of protection of the present invention, as defined in the claims at the end of this description.

. In fact, according to a further aspect of the present invention, a method for manufacturing electro-welded metal mesh is described, formed from longitudinal wires and transversal wires, to be used for producing concrete off-the-shelf components for building, comprising the following steps:
- unwinding and pulling of metal longitudinal and transversal wires from corresponding rollers positioned side-by-side to a manufacturing line for metal mesh;
- stretching and parallel aligning each other of the longitudinal and transversal wires;
- cutting to size of the longitudinal and transversal wires so that to create a respective abutting line orthogonal to the manufacturing line;
- transferring the longitudinal wires onto the manufacturing plane of the metallic mesh so that their abutting line remains orthogonal to the manufacturing line;
- transferring the transversal wires onto the manufacturing plane of the metallic mesh so that their abutting line moves longitudinal to the manufacturing line;
- welding the transversal wires with the longitudinal wires; and
- unloading of the meshes so manufactured from the manufacturing line, wherein
the transfer step of the transversal wires onto the manufacturing plane of the meshes comprises a roto-translation movement of their abutting line around a fixed axis so that to move said abutting line from a position proximal to said axis and orthogonal to the manufacturing line, to a position wherein the abutting line is distal to said axis and longitudinal to the manufacturing line.

**.** Preferably, the aforementioned steps are carried out by means of the plant described above.

**.** As a result, according to the plant and method described above, it is now clear that all the drawbacks presented above have been solved and, at the same time, important advantages have been achieved.

**.** In particular, due to the duplication of the roller lines, it is possible to greatly increase the productivity of a plant for the production of electro-welded metal meshes.

**.** Moreover, the duplication of the roller lines, while bringing an increase in the stations and corresponding devices, does not force to adopt complex and very cumbersome technological solutions. In fact, it is essentially a matter of duplicating a known line of rollers and providing a single kinematic device for the advantageous positioning of the transversal wires entering the welding station correctly.

**.** The aforesaid kinematic device also offers the important advantage of allowing the positioning of the transversal wires above or below the plane identified by the longitudinal wires on the plane of the manufacturing line. In this way, it is possible to make the welding between the transversal and longitudinal wires precisely on one of said two planes according to requirements or preferences simply by positioning the kinematic device at the desired height with respect to the manufacturing line during installation.

**.** In addition, it is also possible to process larger diameter wires, in particular transversal wires, since the stresses due to the need for their bending before the cutting operation are reduced.

**.** As explained, the plant according to the present invention has a smaller overall area, since the rollers of the longitudinal and transversal wires can be arranged side by side and close to the manufacturing line of the meshes, and consequently the longitudinal and transversal wires are fed parallel to each other without the need to rotate the wires unwound from the respective rollers.

**.** It may also be noted that, thanks to the aforesaid structure of the roto-translation device, the unwinding and advancing directions of the wires from each of the lines of the rollers for the longitudinal and transversal wires, entering the stretching machine, are substantially parallel with the same direction.

**.** In this way, also the installation of the plant is facilitated and speeded up since all the devices can be oriented in the same way and do not require additional and/or cumbersome components.

## Claims

1. Plant (1) for producing electro-welded metal mesh, formed from longitudinal wires (L) and transversal wires (T), comprising:
- a manufacturing line (2) provided with a loading station (21) for the longitudinal wires (L) that have been stretched and cut, said station being positioned along the manufacturing line (2) upstream a welding station (22);
- downstream the welding station (22) an unloading station (23) of the electro-welded mesh;
- a first plurality of rollers (3) aligned along an axis (Y-Y) adjacent to the manufacturing line (2) for providing the longitudinal wires (L);
- a second plurality of rollers (4) aligned along an axis (Z-Z) adjacent to the first plurality (3) of rollers for providing transversal wires (T);
- a stretching station (30; 40) and a cutting station (31; 41) respectively connected to each of said first (3) and second (4) plurality of rollers;
- a transfer device (5) of the transversal wires (T) and a transfer device of the longitudinal wires (L) for transferring the wires from the respective cutting stations (31; 41) to said welding station (22), **characterized in that**
- the transfer device (5) of the transversal wires (T) comprises a transfer group (7) controlled by moving means (6; 70) so that to roto-translate the same group carrying the abutting line (C) of the wires from a position proximal to a fixed roto-translation shaft or centre (50), said abutting line being orthogonal to the manufacturing line (2) and proximal to the cutting station (31) of the transversal wires (T), to a distal position with respect to said fixed centre, parallel to the manufacturing line and at the access of the welding station (22).

2. Plant (1) according to claim 1, wherein said moving means comprises a rectilinear rotating arm (6) rotatably fixed at a first end (60) onto said fixed roto-translational shaft or centre (50), and a pin (70) engaging said transfer (7) group in a rotatably way at a second end (61) of said arm.

3. Plant (1) according to claim 2, wherein said transfer group (7) moves from a loading station (8) of the transversal cut wires (T), said station (8) extending substantially parallel to the manufacturing line (2), to an unloading station (9) of the wires, said station (9) extending substantially orthogonal to the manufacturing line.

4. Plant (1) according to claim 3, wherein said rotating arm (6) rotates along an arc of 90° between said loading station (8) and said unloading station (9), whose rotating centre is said fixed roto-translation centre (50).

5. Plant (1) according to any one of claims 2 to 4, wherein said transfer group (7) is caused to perform a double rotation around both the fixed arm (50) and the pin (70).

6. Plant (1) according to claim 1, wherein the shifting of the transfer group (7) of the transversal wires (T) is carried out by a synchronized command of the shifting of the ends of said group along a first guide having an axis parallel to the longitudinal axis of the manufacturing line (2) of the metal mesh and along a second guide having an axis orthogonal to the manufacturing line (2) of the metal mesh, respectively.

7. Plant (1) according to any one of claims 1 to 6, wherein said transfer group (7) is carried from a position substantially parallel to the manufacturing line (2) to a position orthogonal to said manufacturing line.

8. Method of manufacturing electro-welded metal mesh, formed from longitudinal wires (L) and transversal wires (T), to be used for producing concrete off-the-shelf components for building, comprising the following steps:
- unwinding and pulling of metal longitudinal (L) and transversal (T) wires from aligned rollers respectively positioned side-by-side;
- stretching and parallel aligning each other of the longitudinal (L) and transversal (T) wires;
- cutting to size of the longitudinal (L) and transversal (T) wires so that to create a respective abutting line orthogonal to the manufacturing line;
- transferring the longitudinal (L) wires onto the manufacturing plane of the metallic mesh so that their abutting line remains orthogonal to the manufacturing line;
- transferring the transversal (L) wires onto the manufacturing plane of the metallic mesh so that their abutting line moves longitudinal to the manufacturing line;
- welding the transversal (T) wires with the longitudinal (L) wires; and
- unloading of the meshes so manufactured from the manufacturing line,
**characterized in that**
- the transfer step of the transversal (T) wires onto the manufacturing plane of the meshes comprises a roto-translation movement of their abutting line around a first fixed axis (50) so that to move said abutting line from a position proximal to said axis and orthogonal to the manufacturing line, to a position wherein the abutting line is distal to said axis and longitudinal to the manufacturing line.

9. Method according to claim 8, wherein said transfer of the transversal wires (T) is carried out on or below the plane of the longitudinal wires lying onto the manufacturing plane.

10. Method according to claims 8 or 9, **characterized in that** it is carried out with a plant according to any one of claims 1 to 7.

## Patentansprüche

1. Anlage (1) zur Herstellung von elektrogeschweißtem Metallgitter, das aus Längsdrähten (L) und Querdrähten (T) besteht, umfassend:
- eine Fertigungslinie (2), die mit einer Beladestation (21) für die Längsdrähte (L), welche gestreckt und geschnitten wurden, versehen ist, wobei die Station entlang der Fertigungslinie (2) vor einer Schweißstation (22) positioniert ist;
- nach der Schweißstation (22) eine Entladestation (23) für das elektrogeschweißte Gitter;
- eine erste Vielzahl von Rollen (3), die entlang einer Achse (Y-Y) neben der Fertigungslinie (2) ausgerichtet sind, um die Längsdrähte (L) bereitzustellen;
- eine zweite Vielzahl von Rollen (4), die entlang einer Achse (Z-Z) neben der ersten Vielzahl von Rollen (3) ausgerichtet sind, um die Querdrähte (T) bereitzustellen;
- eine Streckstation (30; 40) und eine Schneidstation (31; 41), die jeweils mit jeder der ersten (3) und zweiten (4) Vielzahl von Rollen verbunden sind;
- eine Übertragungsvorrichtung (5) für die Querdrähte (T) und eine Übertragungsvorrichtung für die Längsdrähte (L) zum Übertragen der Drähte von den jeweiligen Schneidstationen (31; 41) zu der Schweißstation (22), **dadurch gekennzeichnet, dass**
- die Übertragungsvorrichtung (5) für die Querdrähte (T) eine Übertragungsgruppe (7) umfasst, die durch Bewegungsmittel (6; 70) gesteuert wird, um eine Rototranslation derselben Gruppe, die die Stoßlinie (C) der Drähte trägt, von einer Position proximal zu einer festen Rototranslationswelle oder einem festen Zentrum (50), wobei die Stoßlinie orthogonal zu der Fertigungslinie (2) und proximal zu der Schneidestation (31) der Querdrähte (T) verläuft, in eine distale Position bezüglich des festen Zentrums, parallel zur Fertigungslinie und am Zugang der Schweißstation (22) durchzuführen.

2. Anlage (1) nach Anspruch 1, wobei die Bewegungsmittel einen geradlinigen Dreharm (6), der an einem ersten Ende (60) drehbar an der festen Rototranslationswelle oder dem festen Zentrum (50) befestigt ist, und einen Stift (70) umfassen, der an einem zweiten Ende (61) des Arms drehbar in die Übertragungsgruppe (7) eingreift.

3. Anlage (1) nach Anspruch 2, wobei sich die Übertragungsgruppe (7) von einer Beladestation (8) der quergeschnittenen Drähte (T), wobei sich die Station (8) im Wesentlichen parallel zu der Fertigungslinie (2) erstreckt, zu einer Entladestation (9) der Drähte bewegt, wobei sich die Station (9) im Wesentlichen orthogonal zu der Fertigungslinie erstreckt.

4. Anlage (1) nach Anspruch 3, wobei sich der Dreharm (6) entlang eines Bogens von 90° zwischen der Beladestation (8) und der Entladestation (9) dreht, dessen Drehzentrum das feste Rototranslationszentrum (50) ist.

5. Anlage (1) nach einem der Ansprüche 2 bis 4, wobei die Übertragungsgruppe (7) veranlasst wird, eine doppelte Drehung sowohl um den festen Arm (50) als auch um den Stift (70) auszuführen.

6. Anlage (1) nach Anspruch 1, wobei die Verschiebung der Übertragungsgruppe (7) für die Querdrähte (T) durch einen synchronisierten Befehl für die Verschiebung der Enden der Gruppe entlang einer ersten Führung mit einer Achse parallel zu der Längsachse der Fertigungslinie (2) des Metallgitters bzw. entlang einer zweiten Führung mit einer Achse orthogonal zu der Fertigungslinie (2) des Metallgitters durchgeführt wird.

7. Anlage (1) nach einem der Ansprüche 1 bis 6, wobei die Übertragungsgruppe (7) von einer Position im Wesentlichen parallel zu der Fertigungslinie (2) in eine Position orthogonal zu der Fertigungslinie gebracht wird.

8. Verfahren zur Herstellung von elektrogeschweißtem Metallgitter, das aus Längsdrähten (L) und Querdrähten (T) besteht, zur Verwendung bei der Herstellung von Betonfertigteilen für den Bau, umfassend die folgenden Schritte:
- Abwickeln und Ziehen von Metall-Längsdrähten (L) und Querdrähten (T) von ausgerichteten Rollen, die jeweils nebeneinander angeordnet sind;
- Strecken und paralleles Ausrichten der Längs- (L) und Querdrähte (T) zueinander;
- Zuschneiden der Längs- (L) und Querdrähte (T), so dass eine entsprechende Stoßlinie orthogonal zur Fertigungslinie entsteht;
- Übertragen der Längsdrähte (L) auf die Fertigungsebene des Metallgitters, so dass ihre Stoßlinie rechtwinklig zur Fertigungslinie bleibt;
- Übertragen der Querdrähte (L) auf die Fertigungsebene des Metallgitters, so dass sich ihre Stoßlinie längs zur Fertigungslinie bewegt;
- Verschweißen der Querdrähte (T) mit den Längsdrähten (L); und
- Entladen der so hergestellten Gitter von der Fertigungsstraße, **dadurch gekennzeichnet, dass**
- der Übertragungsschritt der Querdrähte (T) auf die Fertigungsebene der Gitter eine Rototranslationsbewegung ihrer Stoßlinie um eine erste feste Achse (50) umfasst, so dass die Stoßlinie von einer Position proximal zu der Achse und orthogonal zu der Fertigungslinie in eine Position bewegt wird, in der die Stoßlinie distal zu der Achse und längs zu der Fertigungslinie liegt.

9. Verfahren nach Anspruch 8, wobei die Übertragung der Querdrähte (T) auf oder unter der Ebene der Längsdrähte, die auf der Fertigungsebene liegt, durchgeführt wird.

10. Verfahren nach den Ansprüchen 8 oder 9, **dadurch gekennzeichnet, dass** es mit einer Anlage nach einem der Ansprüche 1 bis 7 durchgeführt wird.

## Revendications

1. Installation (1) pour la production de mailles métalliques électro-soudées, formées de fils longitudinaux (L) et de fils transversaux (T), comprenant :
- une ligne de fabrication (2) munie d'un poste de chargement (21) des fils longitudinaux (L) étirés et coupés, ledit poste étant positionné le long de la ligne de fabrication (2) en amont d'un poste de soudage (22) ;
- en aval du poste de soudage (22), un poste de déchargement (23) des mailles électro-soudées ;
- une première pluralité de rouleaux (3) alignés le long d'un axe (Y-Y) adjacent à la ligne de fabrication (2) pour fournir les fils longitudinaux (L) ;
- une deuxième pluralité de rouleaux (4) alignés le long d'un axe (Z-Z) adjacent à la première pluralité de rouleaux (3) pour fournir des fils transversaux (T) ;
- un poste d'étirage (30 ; 40) et un poste de coupe (31 ; 41) respectivement reliés à chacune desdites première (3) et deuxième (4) pluralités de rouleaux ;
- un dispositif de transfert (5) des fils transversaux (T) et un dispositif de transfert des fils longitudinaux (L) pour transférer les fils desdits postes de coupe (31 ; 41) respectif audit poste de soudage (22), **caractérisée en ce que**
- le dispositif de transfert (5) des fils transversaux (T) comprend un groupe de transfert (7) commandé par des moyens de déplacement (6 ; 70) de manière à roto-translationner le même groupe portant la ligne de butée (C) des fils depuis une position proximale à un arbre ou centre fixe de roto-translation (50), ladite ligne de butée étant orthogonale à la ligne de fabrication (2) et proximale au poste de coupe (31) des fils transversaux (T), jusqu'à une position distale par rapport audit centre fixe, parallèle à la ligne de fabrication et à l'accès au poste de soudage (22).

2. Installation (1) selon la revendication 1, dans laquelle lesdits moyens de déplacement comprennent un bras rotatif rectiligne (6) fixé de manière rotative à une première extrémité (60) sur ledit arbre ou centre fixe de roto-translation (50), et une broche (70) engageant ledit groupe de transfert (7) de manière rotative à une seconde extrémité (61) dudit bras.

3. Installation (1) selon la revendication 2, dans laquelle ledit groupe de transfert (7) se déplace d'un poste de chargement (8) des fils coupés transversalement (T), ledit poste (8) s'étendant sensiblement parallèlement à la ligne de fabrication (2), à un poste de déchargement (9) des fils, ledit poste (9) s'étendant sensiblement orthogonalement à la ligne de fabrication.

4. Installation (1) selon la revendication 3, dans laquelle ledit bras rotatif (6) tourne le long d'un arc de 90° entre ledit poste de chargement (8) et ledit poste de déchargement (9), dont le centre de rotation est ledit centre fixe de roto-translation (50).

5. Installation (1) selon l'une quelconque des revendications 2 à 4, dans laquelle ledit groupe de transfert (7) est amené à effectuer une double rotation autour à la fois du bras fixe (50) et de la broche (70).

6. Installation (1) selon la revendication 1, dans laquelle le déplacement du groupe de transfert (7) des fils transversaux (T) est effectué par une commande synchronisée du déplacement des extrémités dudit groupe le long d'un premier guide ayant un axe parallèle à l'axe longitudinal de la ligne de fabrication (2) des mailles métalliques et le long d'un second guide ayant un axe orthogonal à la ligne de fabrication (2) des mailles métalliques, respectivement.

7. Installation (1) selon l'une quelconque des revendications 1 à 6, dans laquelle ledit groupe de transfert (7) est porté d'une position sensiblement parallèle à la ligne de fabrication (2) à une position orthogonale à ladite ligne de fabrication.

8. Procédé de fabrication de mailles métalliques électro-soudées, formées de fils longitudinaux (L) et de fils transversaux (T), destinées à être utilisées pour produire des éléments de construction en béton prêts à l'emploi, comprenant les étapes suivantes de :
- déroulement et tirage de fils métalliques longitudinaux (L) et transversaux (T) à partir de rouleaux alignés respectivement positionnés côte à côte ;
- étirage et alignement parallèle des fils longitudinaux (L) et transversaux (T) ;
- découpage des fils longitudinaux (L) et transversaux (T) de manière à créer une ligne de butée respective orthogonale à la ligne de fabrication ;
- transfert des fils longitudinaux (L) sur le plan de fabrication des mailles métalliques de manière à ce que leur ligne de butée reste orthogonale à la ligne de fabrication ;
- transfert des fils transversaux (L) sur le plan de fabrication des mailles métalliques de manière à ce que leur ligne de butée se déplace longitudinalement par rapport à la ligne de fabrication ;
- soudage des fils transversaux (T) avec les fils longitudinaux (L) ; et
- déchargement des mailles ainsi fabriquées de la ligne de fabrication,
**caractérisé en ce que**
- l'étape de transfert des fils transversaux (T) sur le plan de fabrication des mailles comprend un mouvement de roto-translation de leur ligne de butée autour d'un premier axe fixe (50) afin de déplacer ladite ligne de butée d'une position proximale audit axe et orthogonale à la ligne de fabrication, à une position dans laquelle la ligne de butée est distale audit axe et longitudinale à la ligne de fabrication.

9. Procédé selon la revendication 8, dans lequel ledit transfert des fils transversaux (T) est effectué sur ou sous le plan des fils longitudinaux se trouvant sur le plan de fabrication.

10. Procédé selon la revendication 8 ou 9, **caractérisé en ce qu'**il est réalisé avec une installation selon l'une quelconque des revendications 1 à 7.
